(19) Europäisches Patentamt
European Patent Office
Office européen des brevets

(11) Publication number: **0 667 105 A1**

# (12) EUROPEAN PATENT APPLICATION

(21) Application number: **95100083.5**

(51) Int. Cl.[6]: **A23D 9/013**

(22) Date of filing: **04.01.95**

(30) Priority: **12.01.94 US 180946**

(43) Date of publication of application:
**16.08.95 Bulletin 95/33**

(84) Designated Contracting States:
**AT BE CH DE DK ES FR GB GR IE IT LI LU MC NL PT SE**

(71) Applicant: **CPC INTERNATIONAL INC.**
**International Plaza**
**P.O. Box 8000**
**Englewood Cliffs**
**New Jersey 07632 (US)**
Applicant: **ARCO Chemical Technology, L.P.**
**Two Greenville Crossing**
**4001 Kennett Pike, Suite 238**
**Greenville, Delaware 19807 (US)**

(72) Inventor: **Ziegert, Thaddeus R.**
**14 Indian Lane,**
**Hackettstown,**
**N.J. 07840 (US)**
Inventor: **Sekula, Bernard C.**
**25 A Sylvan Road**
**High Bridge, N.J. 08829 (US)**
Inventor: **Rinaldi, Nancy A.**
**55 Christopher Street**
**Carteret N.J. 07008 (US)**

(74) Representative: **Keller, Günter, Dr. et al**
**Lederer, Keller & Riederer**
**Patentanwälte**
**Prinzregentenstrasse 16**
**D-80538 München (DE)**

## (54) Improved frying fats and oils.

(57) Frying fats and oils with improved stability and frylife by the addition thereto of from about 5.0% to about 95% by weight of esterified propoxylated glycerol.

EP 0 667 105 A1

## BACKGROUND OF THE INVENTION

### FIELD OF THE INVENTION

The present invention relates to frying fats and oils with improved stability. Particularly this invention relates to frying fats and oils to which esterified propoxylated glycerol (EPG) has been added to improve the stability thereof.

### DESCRIPTION OF THE RELATED ART

Most fats and oils (hereinafter generally referred to as oils), which are manufactured as cooking fats and oils can be made bland by proper processing. During storage and cooking, these oils undergo physical and chemical changes resulting from various external influences, such as light, heat, trace metals and various other pro-oxidants. The primary change brought on by these external forces is the reaction of oxygen with the sites of unsaturation in the oils; i.e., oxidation. The initial product of oxidation are hydroperoxides which have no odors or flavors. However, hydroperoxides can decompose to form a diversity of secondary compounds, such as acids, alcohols, aldehydes, ketones, hydrocarbons, hydroxy compounds, epoxides, esters and polymers. It is these secondary oxidation products which cause the off flavors and odors in oils.

Various attempts have been made over the years to improve the frylife of oils, i.e. to increase its length of usage by minimizing or counteracting the negative aspects such as off flavor, off color and foaming.

In U.S. Patent No. 2,998,319, reissued RE 25-488, frying oils with high smoke points are disclosed. Specifically, vegetable oils are treated with a minute amount of methyl and ethyl siloxanes, particularly at levels of from about 6 to about 70 parts per million combined.

In application WO 91/17667, a hydrogenated frying fat with extended frylife is disclosed. The fat is produced by hydrogenating a liquid oil with an iodine value of 95 to 150 to an iodine value of 50 to 90 wherein the reaction temperature of the oil is at a level of from about 160° to about 260°C for at least about 5 minutes, cooling the oil, filtering the oil, deaerating the oil and the deodorizing the oil. The deodorization proceeds at a temperature of between 277° and 343°C.

U.S. Patent No. 4,789,554 to Scavone et al. also discloses a process for extending the frylife of an edible oil. Specifically, a high temperature deodorization of deaerated oil, from 277°C to 343°C proceeds for a period of from about 5 seconds to about 15 minutes. Tocopherols and related structures believed to be deleterious to frylife are removed, resulting in a purified oil with extended frylife.

In U.S. Patent No. 2,634,213, it is disclosed that the addition of very small quantities of certain aliphatic organo silicon oxide polymers in shortenings which are substantially free from oxidized and polymerized products yields a composition which exhibits increased stability, especially at high temperatures, and decreased foaming during frying.

In EPO Application No. 0 433 016 A2, compositions useful as high temperature media are disclosed. They are comprised of blends of fatty acid esters and aliphatic esters. The fatty acid esters have iodine numbers of at least 18 and are preferably lipids derived from animal, vegetable or marine sources. Reduced calorie high temperature cooking compositions suitable for frying applications and exhibiting greatly improved resistance to thermal degradation may be obtained by the use of an esterified alkoxylated polyol as the aliphatic ether component.

However, it has been presently found that an oil can be made with an extended frylife, improved stability and less odors and foaming, without the need for complicated or detailed processing parameters and conditions.

## SUMMARY OF THE INVENTION

The present invention relates to frying oils which exhibit improved stability, decreased smoking and extended frylife. Specifically, it has been found that the addition of esterified propoxylated glycerol to oils, prior to using said oils as frying mediums, will increase the frylife of said oils, improve their stability, and the oils will exhibit less undesirable odors and less foaming and will have increased tocopherol retention over oils subjected to the same conditions, but which are not combined with EPG.

Esterified propoxylated glycerol, which has been identified as a reduced calorie fat substitute, is incorporated in a frying oil at levels of from about 5.0 to about 95% by weight. The frying oil can be any known edible oil, whether of a hydrogenated, particularly hydrogenated, or non-hydrogenated form, saturated or unsaturated. When solid at ambient temperatures, the edible oil should be put into liquid form before the addition of the esterified propoxylated glycerol.

DETAILED DESCRIPTION OF THE INVENTION

Esterified propoxylated glycerol, and other esterified alkoxylated polyols, have been disclosed as reduced calorie fat substitutes. Compounds of this type are described in U.S. Patent Nos. 4,861,613 and 4,983,329. The compounds are substantially resistant to hydrolysis upon digestion owing to the high proportion of linkages in which the carbons adjacent to oxygen in the fatty acid ester groups are secondary or tertiary in structure. A preferred embodiment of the structure is:

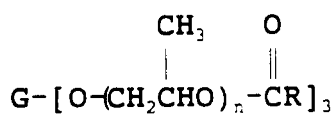

where G is the glycerol radical, n is from about 1 to 3 on average and R is a long chain paraffinic or olefinic hydrocarbon radical derived from a fatty acid.

It has been found that the addition of esterified propoxylated glycerol to edible oils which are used as a frying medium, has a positive effect on the oil's stability, and therefore increases its frylife. Esterified propoxylated glycerol appears more stable than other, conventional oils, when various parameters are examined, particularly color, peroxide value, anisidine value, free fatty acid content and retained tocopherol levels. Combining esterified propoxylated glycerol with conventional oils has a synergistic effect and results in an oil based blend which is more stable than one would expect based upon the blend ratio.

The term oil as used herein shall refer to edible fats and oils comprising triglycerides, fatty acids, fatty alcohols and esters of such acids and alcohols. Especially appropriate for use in the present invention are triglycerides of straight chain or branched chain, saturated or unsaturated, monocarboxylic acids having from 10 to 28 carbon atoms. Suitable sources of such oils are a) vegetable fats and oils such as soybean, corn, sunflower, rapeseed, low erucic acid rapeseed (canola), cottonseed, olive, safflower, sesame seed, nasturtium seed, tiger seed, rice bran, wallflower and mustard seed; b) meat fats such as tallow or lard; c) marine oils such as menhaden, pilchard, sardine, whale or herring; d) nut fats and oils such as coconut, palm, palm kernel, babassu kernel or peanut; e) butter fat, milk fat; f) cocoa butter and cocoa butter substitutes such as shea, or illipe butter; and g) synthetic fats.

When oils are used for deep frying, they are subjected to temperatures in the range of from about 175°C to about 190°C. Food is immersed in oil, and fried for varying lengths of time. The oils are often reused as subsequent batches of food are cooked. Thus, the oils are maintained at elevated temperatures for prolonged periods of time. As a result of the prolonged exposure to high temperature, various reactions take place in the oils. Some of the changes include increased color, oxidation, polymerization and hydrolysis.

The change in color, or darkening of the oil may be caused by two factors. During the frying process, substances are extracted from the food and collect in the oil. These extracted materials can react with the oil and cause it to darken in color. The second cause of color darkening is thought to be from the oxidation of minor oil components, such as tocopherols, tocotrienols and other quinone-type materials which, upon heating in the presence of air, form dark brown colored bodies. As the oil gets darker with use, the food fried in it darkens more rapidly, eventually reaching the point where food absorbs too much dark color before it is completely cooked. As this point, the oil can no longer be used.

In oxidation, oxygen from the air reacts with the oil, particularly its sites of unsaturation. The initial product of oxidation are hydroperoxides which have no odor or flavor. Hydroperoxides, however, further oxidize and decompose into secondary compounds, such as acids, alcohols, aldehydes, ketones, hydrocarbons, hydroxy compounds, epoxides, esters and polymers, and results in off flavors and undesirable colors.

Additionally, oxidation is accompanied by polymerization, wherein relatively small oil molecules combine to form very large molecules. Polymerization generally takes place along the sides of the vessel where the surface of the oil comes in contact with air, and becomes evident as a gummy deposit. Polymerization leads to increased viscosity and foaming. Foaming is the formation of small bubbles which slowly creep up the sides of the frying vessel. Excessive foaming is an indicator that an oil should no longer be used.

Another reaction which occurs in oils used as frying mediums is hydrolysis. Hydrolysis is the reaction of water which is released from the food with the cooking oil to form liberate fatty acids. Free fatty acid formation is dependent upon the amount of water in the food, the amount of food fried in a given quantity of oil and the frying temperature. The presence of free fatty acids in a frying oil is undesirable since they lead to further decomposition of the oil, and shorten its frylife.

All of these chemical reactions result in characteristics which are undesirable in a frying oil, and eventually cause the oil to be discarded. However, it has been found that by adding esterified propoxylated glycerol to the oil, the frylife of the oil is extended. This is because the addition of the esterified propoxylated glycerol acts as a stabilizer in the oil, and decreases the rate of oxidation, polymerization, hydrolysis and speed of color darkening in the oil.

The oil can be combined with the esterified propoxylated glycerol by a simple mixing of the two compounds.

The esterified propoxylated glycerol can be added to the oil in a vast range, i.e. from about 5.0% by weight to about 95.0% by weight of the final product. As a stabilizer, the esterified propoxylated glycerol can be added at the lower end of the range, preferably in an amount of from about 5.0 to about 10.0% by weight of the final product. This will result in an oil which is more stable and has a longer frylife. However, since esterified propoxylated glycerol is a known fat substitute, its addition to the frying oil medium in increasing amounts will have the additional benefit of resulting in an oil product which is reduced in fat and calories. The oils to which esterified propoxylated glycerin can be added are, as previously stated, any oil derived from vegetable, animal, or marine life sources, or any synthetic fats which exhibit characteristics such that they are suitable for use as frying medium.

The esterified propoxylated glycerol can be added to the oil at various times, depending upon the intended use of the oil and the particular oil in question. Obviously, if the oil to be used is a solid at room temperature, either in its natural state or as a result of hydrogenation, the esterified propoxylated glycerol must be added during or just after the melting process, but prior to the frying application. In the event that an oil is liquid at room temperature, the esterified propoxylated glycerol may be combined with the oil at any time after the completion of processing of the oil until just before its use as a frying medium.

The following examples are meant to be illustrative, and not limiting of the invention in any manner.

## EXAMPLE 1

Three oil samples were prepared. One was 100% Crisco Oil (Procter & Gamble, Cincinnati, Ohio). The second was 100% EPG-08 Soy (ARCO Chemical Company, Newtown Square, Pennsylvania) and the third sample was a blend of Crisco and EPG-08 Soy at a ratio of 2:1 by weight (Crisco:EPG) [Note: EPG-08 Soy is defined as esterified propoxylated-glycerol containing, on average, 8 oxypropylene units/glycerol molecule and soybean oil fatty acids]. 1500 grams of each product was weighed into a deep fryer. The oil in the fryer was heated to a temperature of 190,6 °C (375 °F). 250 grams of previously frozen french fried potatoes (defrosted, patted dry) were put into a basket and lowered into the fryer. The potatoes remained in the oil for 5 minutes and were then removed. This procedure continued for a total of 4 fryings per day for five days. The oil remained heated for a total of approximately six (6) hours per day and cooled down to ambient temperatures overnight. At the beginning of each of days 2 through 5, 250 grams fresh oil product was added to the fryer to replenish the oil that was absorbed by the french fries or removed for sample analysis.

After the fifth day of frying, the oils were cooled down to ambient temperatures, and samples analyzed to measure color, free fatty acid content, tocopherol levels, anisidine value, peroxide value, viscosity and interfacial tension. The results are set forth in Tables I and II. It is clear that the Crisco/EPG blend exhibited superior results which are preferred over either of the other oil products individually.

TABLE I

| Initial Oil Samples | CRISCO | EPG-08 Soy | CRISCO/EPG BLEND (2:1) |
|---|---|---|---|
| Color (13.3 cm cell) | 0.3 R*/2.1 Y** | 1.0 R*/5.8 Y** | - |
| PV (peroxide value) | 0.3 | 8.2 | 1.7 |
| AV (anisidine value) | 1.33 | 6.2 | 2.5 |
| FFA (free fatty acid content), | % 0.02 | 0.18 | 0.1 |
| Tocopherols (mg/100 g) | | | |
| - alpha | 10.9 | 12.0 | 12.2 |
| - gamma | 95.3 | 81.3 | 88.8 |
| - delta | 32.3 | 45.5 | 35.8 |
| - total | 138.5 | 138.8 | 136.7 |
| Oil Samples after 5 Days of Frying | | | |
| Color (13.3 cm cell) | 8.6 R*/70 + Y** | 4.5 R*/33 Y** | 3.0 R*/20 Y** |
| PV | 8.0 | 3.4 | 2.9 |
| AV | 133.3 | 53.8 | 63.5 |
| FFA, % | 0.22 | 0.50 | 0.32 |
| Tocopherols (mg/100 g) | | | |
| - alpha | 3.2 | 7.2 | 7.8 |
| - gamma | 9.1 | 33.3 | 46.6 |
| - delta | 11.6 | 30.8 | 21.1 |
| - total | 23.9 | 71.3 | 75.6 |

* red
** yellow

TABLE II

| Viscosity (mPas) @ 25 °C | Initial Oil Samples | After 2 days Frying | After 5 days Frying |
|---|---|---|---|
| EPG-08 Soy | 101.4 | 105.6 | 116.5 |
| CRISCO | 50.3 | 81.4 | 116.1 |
| CRISCO/EPG Blend | 63.5 | 63.8 | 70.5 |
| Viscosity (mPas) @ 70 °C | | | |
| EPG-08 Soy | 22.3 | 22.9 | 25.5 |
| CRISCO | 13.1 | 19.0 | 24.5 |
| CRISCO/EPG Blend | 15.6 | 15.6 | 17.7 |
| Apparent Interfacial Tension (dynes/cm) | | | |
| EPG-08 Soy | 21.1 | 19.0 | 17.9 |
| CRISCO | 25.4 | 19.8 | 16.5 |
| CRISCO/EPG Blend | 22.3 | 21.2 | 19.8 |

It was also noted that the Crisco only sample foamed and was difficult to work with after the first two days of frying. To reduce foaming, the dry basket, which housed the potatoes, had to be taken in and out of the frying oil until the frying oil stabilized. This was not necessary for the EPG-08 soy, nor for the Crisco/EPG blend samples. It was also observed that the 100% Crisco sample had a slightly higher amount of sediment in the oil after completion of the study.

## Claims

1. A frying oil with improved stability which comprises the addition of from about 5.0 to about 95% by weight esterified propoxylated glycerol.

2. The frying oil of claim 1 which comprises from about 15 to about 60% by weight esterified propoxylated glycerol.

3. The frying oil of claim 1 wherein the frying oil is chosen from the group consisting of soybean oil, corn oil, sesame oil, peanut oil, safflower oil, tallow, sunflower oil, canola oil and combinations thereof.

4. The frying oil of claim 3 which is partially or fully hydrogenated.

5. The frying oil of claim 1 wherein the esterified propoxylated glycerol is partially or fully hydrogenated.

6. A reduced calorie and reduced fat frying oil with improved stability which comprises from about 35 to about 95% by weight esterified propoxylated glycerol.

7. A method of stabilizing a frying oil which comprises the addition of from 5.0 to about 95% by weight of esterified propoxylated glycerol.

8. The method of claim 6 wherein esterified propoxylated glycerol is added in an amount of from about 5.0 to about 10.0% by weight of the final product.

European Patent Office

# EUROPEAN SEARCH REPORT

Application Number
EP 95 10 0083

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,X | EP-A-0 433 016 (ARCO CHEMICAL TECHNOLOGY)<br>* page 2, line 41 - page 3, line 55 *<br>* page 4, line 31 - page 8, line 55 *<br>* claims 1-18,21 *<br>--- | 1-8 | A23D9/013 |
| X | EP-A-0 571 219 (ARCO CHEMICAL TECHNOLOGY)<br>* page 7, line 53 - line 54 *<br>* page 8, line 18 - line 25 *<br>* claims 1,6,14-16 *<br>--- | 1-8 | |
| D,X | US-A-4 861 613 (JOHN F. WHITE ET AL.)<br>* column 6, line 9 - line 14 *<br>* claims 1-6,12 *<br>----- | 1-8 | |

TECHNICAL FIELDS SEARCHED (Int.Cl.6)

A23D

The present search report has been drawn up for all claims

| Place of search | Date of completion of the search | Examiner |
|---|---|---|
| THE HAGUE | 25 April 1995 | Dekeirel, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)